Europäisches Patentamt

(19) European Patent Office

Office européen des brevets

(11) Veröffentlichungsnummer: **0 239 765**
**B1**

(12) **EUROPÄISCHE PATENTSCHRIFT**

(45) Veröffentlichungstag der Patentschrift:
27.09.89

(51) Int. Cl.⁴: **H02M 7/538, H02M 3/337**

(21) Anmeldenummer: **87102231.5**

(22) Anmeldetag: **17.02.87**

(54) Wechselrichter mit einer Gleichspannungsquelle und einem Zerhackerteil.

(30) Priorität: **28.02.86 DE 3606462**

(43) Veröffentlichungstag der Anmeldung:
**07.10.87 Patentblatt 87/41**

(45) Bekanntmachung des Hinweises auf die Patenterteilung:
**27.09.89 Patentblatt 89/39**

(84) Benannte Vertragsstaaten:
**AT BE CH FR GB LI**

(56) Entgegenhaltungen:
**EP-A- 0 057 083**
**GB-A- 2 045 550**
**US-A- 3 596 165**
**US-A- 4 301 499**

(73) Patentinhaber: **LEYBOLD AKTIENGESELLSCHAFT,**
**Wilhelm-Rohn-Strasse 25, D-6450 Hanau am Main(DE)**

(72) Erfinder: **Stürmer, Johann, Pestalozzistrasse 8,**
**D-6463 Freigericht(DE)**
Erfinder: **Thomas, Friedrich-Werner, Dr.-Ing.,**
**Schwarzwaldweg 2, D-6460 Gelnhausen 2(DE)**

(74) Vertreter: **Schickedanz, Willi, Dipl.-Ing., Langener**
**Strasse 68, D-6050 Offenbach/Main(DE)**

ACTORUM AG

## Beschreibung

Die Erfindung betrifft einen Wechselrichter mit einer Gleichspannungsquelle und einem Zerhackerteil, das im Gegentakt arbeitende Schaltmittel aufweist, die mit der Frequenz $f_0$ geschaltet werden, wobei zwischen dem Zerhackerteil und der Gleichspannungsquelle ein Parallelschwingkreis vorgesehen ist.

Auf zahlreichen Gebieten der Elektrotechnik ist es erforderlich, einen möglichst glatten Gleichstrom für die Speisung einer Einrichtung aus einem Wechselstromnetz zu erhalten. Ein Beispiel hierfür ist die Heizung der Elektronenstrahlkanone einer Elektronenschweißmaschine. Wird diese Katode mit einem zu welligen Gleichstrom aufgeheizt, so läßt sich der Elektronenstrahl nicht exakt steuern.

Die Welligkeit eines aus einem 50 Hz-Wechselstromnetz gewonnenen Gleichstroms läßt sich bekanntlich durch Siebmittel, insbesondere durch Kondensatoren, verringern. Außerdem ist es bekannt, die Welligkeit durch Frequenzerhöhung zu verringern. Hierbei wird die 50 Hz-Wechselstromnetzfrequenz beispielsweise in den Kilohertz-Bereich transformiert.

Die Frequenzerhöhung wird in der Regel durch einfache Gleichrichtung der Netzwechselspannung mit anschließender hochfrequenter Zerhackung der gleichgerichteten Spannung bewirkt. Der Glättungsaufwand, der erforderlich ist, um eine nahezu ideale Gleichspannung zu erhalten, ist bei erhöhter Frequenz wesentlich geringer. Allerdings ist die Verlustleistung, die an den Schaltmitteln des Zerhackers während des Schaltvorgangs auftritt, relativ groß, was sich insbesondere dann störend bemerkbar macht, wenn hohe Leistungen geschaltet werden sollen.

Bei der erwähnten Katodenheizungsversorgung sind etwa 300 Watt an einem Transformator mit großer Streuinduktivität zu schalten, wobei die auf -60 kV liegende Katode mit möglichst glattem Gleichstrom versorgt werden muß.

Es sind bereits zahlreiche Wechselrichter bekannt, die mittels eines elektronischen Zerhackers einen Gleichstrom in Wechselstrom umformen (DE-PS 27 13 072, DE-OS 31 42 304). Diese Wechselrichter weisen jedoch zwischen dem Zerhackerteil und der Gleichspannungsquelle keinen Parallelschwingkreis auf.

Es sind indessen auch Wechselrichter bekannt, die einen Parallelschwingkreis enthalten (DE-PS 24 53 924, DE-OS 31 42 304, EP-A 005083, JP-Z: Patents Abstracts of Japan, E-204, October 15, 1983, Vol. 7, Nr. 233, 58-123369 (A)).

Die Resonanzfrequenzen der jeweiligen Parallelschwingkreise stehen hierbei jedoch in einem nichtoptimalen Verhältnis zur Frequenz, mit denen die Schaltmittel des Wechselrichters geschaltet werden.

Weiterhin ist ein Wandler mit geregelter Ausgangsgröße bekannt, der einen Serienschwingkreis und eine Rückführung aufweist (US-A 3 596 165).

Bei einem anderen bekannten Wandler ist zwar ein Parallelschwingkreis vorgesehen, doch erfolgt hierbei die Schaltung unipolar mit einem Transistor, d. h. es handelt sich nicht um eine Mittelpunktschaltung unter Verwendung von zwei Transistoren, die im Gegentakt arbeiten (EP-A 0 057 083). Hierdurch ergeben sich relativ ungünstige Schwingkreisdaten.

Es ist ferner bekannt, einen Parallelschwingkreis in Reihe zu einer anderen Parallelkreisschaltung zu schalten (GB-W 2 045 550). Hierbei wird die Spannung durch eine Pulbreitensteuerung erzeugt.

Ferner ist eine Schaltungsanordnung bekannt, bei der ein Parallelschwingkreis eingesetzt wird (US-A 4 301 499). Dieser Schwingkreis wird jedoch entsprechend der Srhaltfrequenz eines Pulsbreitenmodulators mit einer Grundwelle betrieben. Unter diesen Bedingungen besteht zwischen einer Quelle und einer Senke bei einfacher Frequenz Hochohmigkeit, während bei doppelter Frequenz Niederohmigkeit besteht.

Schließlich sind auch noch weitere Wandler bekannt (US-A 3 748 536, US-A 3 746 963, US-A 4 410 936, US-A 4 679 129), die jedoch relativ große Verlustleistungen während des Schaltens aufweisen.

Der Erfindung liegt die Aufgabe zugrunde, bei einem Wechselrichter die Verlustleistung der Schaltmittel des Zerhackerteils während des Schaltvorgangs wesentlich zu reduzieren.

Diese Aufgabe wird dadurch gelöst, daß die Resonanzfrequenz des Parallelschwingkreises auf 2 $f_0$ gelegt ist.

Der mit der Erfindung erzielte Vorteil besteht insbesondere darin, daß das Umschalten der Schaltmittel, die im Gegentakt arbeiten, stets dann erfolgt, wenn die Schwingspannung vom Parallelschwingkreis Null ist. Da die Verlustleistung während des Schaltens durch das Produkt aus Strom und Spannung innerhalb dieses Zeitraums definiert ist, wird hierdurch die Schaltverlustleistung stark reduziert.

Ein Ausführungsbeispiel der Erfindung ist in der Zeichnung dargestellt und wird im folgenden näher beschrieben.
Es zeigen:

Fig. 1 eine erfindungsgemäße Schaltungsanordnung;
Fig. 1a die sekundärseitige Beschaltung eines Transformators;
Fig. 2 den Verlauf der Kollektorschaltung und des Kollektorstroms bei einem Gegentakt-Schalttransistor in einer Schaltung ohne den erfindungsgemäßen Parallelschwingkreis;
Fig. 3 den Verlauf der Kollektorspannung und des Kollektorstroms bei einem erfindungsgemäßen Gegentakt-Schalttransistor, der in eine Schaltung mit dem erfindungsgemäßen Parallelschwingkreis eingesetzt ist;

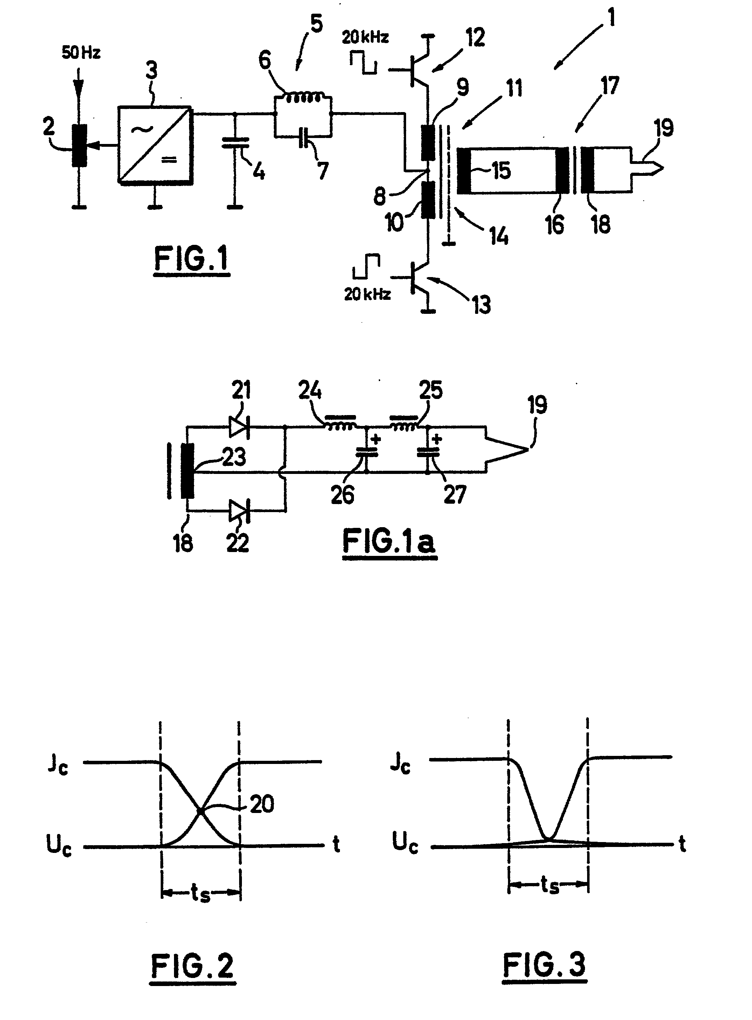

In der Fig. 1 ist ein erfindungsgemäßer Wechselrichter 1 dargestellt, der eingangsseitig eine Netzwechselspannung von 50 Hz aufweist, die an einem Stelltransformator 2 abgegriffen wird. Die an dem Stelltransformator 2 abgegriffene Wechselspannung wird einem Gleichrichter 3 zugeführt, der beispielsweise ein Graetz-Gleichrichter ist und dem ein Sieb- oder Glättungskondensator 4 nachgeschaltet ist, der beispielsweise $10^4$ µF bei 100 V hat. Am Ausgang dieses Gleichrichters 3 stehen z. B. 70 V_ bei 4,5 A an. Dieser Ausgang ist mit einem Parallelschwingkreis 5 verbunden, der eine Spule 6 und einen Kondensator 7 aufweist. Die Resonanzfrequenz dieses Parallelschwingkreises beträgt z. B. 40 kHz. Mit dem Ausgang des Parallelschwingkreises 5 ist der Verbindungspunkt 8 zweier Primärwicklungen 9,10 eines Symmetriertransformators 11 verbunden. Die in Reihe geschalteten Wicklungen 9,10 sind mit denjenigen Enden, die nicht an dem Verbindungspunkt 8 liegen, an den Kollektor jeweils eines Transistors 12 bzw. 13 angeschlossen. Während die Emitter dieser Transistoren an Masse liegen, werden ihre Basen mit einer 20 kHz-Rechteckspannung im Gegentakt angesteuert. Die Schaltmittel, mit denen das 20 kHz-Steuersignal erzeugt wird, sind als solche bekannt und werden deshalb nicht dargestellt. Die Sekundärseite des einen Kern 14 aufweisenden Transformators 11 wird durch eine Wicklung 15 gebildet, die parallel zur Primärseite 16 eines Isolationsübertragers 17 liegt, dessen Sekundärseite 18 mit einer Katodenheizung 19 verbunden ist. Diese Katodenheizung wird bei 0,25 Ohm mit etwa 50 A beschickt.

Denkt man sich in der Fig. 1 den Parallelschwingkreis weg, so wirken die Transistoren als normale Zerhacker der vom Gleichrichter 3 kommenden Gleichspannung. Da im Beispiel die Taktfrequenz zu $f_0 = 20$ kHz angenommen ist, ergibt sich ein über die Primärseite des Transformators 11 fließender Wechselstrom von $f_0 = 20$ kHz. Der Transformator kann beispielsweise ein Ferritübertrager mit zwanzig Windungen der Wicklungen 9,10 und mit 10 Windungen der Wicklung 15 sein.

In der Fig. 1a ist die Beschaltung der Sekundärseite 18 des Transformators 11 im einzelnen dargestellt. Das obere und untere Ende der Sekundärseite 18 ist jeweils mit der Anode einer Diode 21 bzw. 22 verbunden, wobei die Katoden dieser Dioden 21,22 miteinander in Verbindung stehen. Zwischen einer Mittelanzapfung 23 der Sekundärseite 18 und der Katodenheizung 19 liegen, außer der Diode 21, noch zwei LC-Filter 24,26 bzw. 25,27. Diese LC-Filter dienen als Glättungselemente, wobei die Induktivitäten 24,25 je Schalenkern etwa 10 Windungen aufweisen.

Bei dem normalen Zerhackerbetrieb ergibt sich ein Strom- und Spannunsverlauf am Kollektor der Transistoren 12,13, wie er in der Fig. 2 dargestellt ist. Wird z. B. der Transistor 12 durch einen entsprechenden Steuerimpuls in den nichtleitenden Zustand gebracht, so nimmt der Strom $I_c$ allmählich ab, bis er den Wert Null erreicht. Die Kollektor-Emitter-Spannung $U_c$ nimmt dagegen, von Null kommend, zu, bis sie ihren maximalen Wert erreicht hat. Im Punkt 20 schneidet sich die $U_c$-Kurve mit der $I_c$-Kurve. Die während der Schaltzeit $t_s$ auftretende Verlustleistung wird durch das Produkt der jeweiligen Momentanwerte von $I_c$ und $U_c$ bestimmt. Die Verlustleistung ist somit relativ groß.

Wird zwischen den Gleichrichter 3 und den Verbindungspunkt 8 des Symmetriertransformators 11 der Parallelschwingkreis 5 geschaltet, so ergibt sich für $U_c$ und $I_c$ der in der Fig. 3 dargestellte Verlauf. Die zunächst über die Spule 6 gelangende Gleichspannung wird durch den Zerhacker 9,10,12,13 im 20 kHz-Rhythmus zerhackt. Hierdurch wird der Parallelschwingkreis 5 zum Schwingen angeregt, und zwar mit der ihm eigenen Frequenz von 40 kHz. Am Punkt 8 steht folglich eine sinusförmige Schwingspannung von 40 kHz an. Diese Schwingspannung ist stets dann Null, wenn die Schalttransistoren 12,13 umgeschaltet werden. Da es sich bei der am Punkt 8 anliegenden Spannung um eine aufgeprägte Spannung handelt, könnte im Prinzip statt eines Parallelschwingkreises 5 auch ein anderes Bauelement verwendet werden, das eine 40 kHz-Spannung fest vorgibt.

Wie der in der Fig. 3 dargestellte Kurvenverlauf erkennen läßt, ist während der Schaltzeit $t_s$ entweder $I_c$ praktisch Null, wenn $U_c$ einen positiven Wert hat, oder $U_c$ ist praktisch Null, wenn $I_c$ einen positiven Wert hat. Damit ist die Verlustleistung während der gesamten Schaltzeit $t_s$ vernachlässigbar klein.

**Patentansprüche**

1. Wechselrichter mit einer Gleichspannungsquelle (3) und einem Zerhackerteil (9,10,12,13), das im Gegentakt arbeitende Schaltmittel (12,13) aufweist, die mit der Frequenz $f_0$ geschaltet werden, wobei zwischen dem Zerhackerteil (9,10,12,13) und der Gleichspannungsquelle (3) ein Parallelschwingkreis (5) vorgesehen ist, dadurch gekennzeichnet, daß die Resonanzfrequenz des Parallelschwingkreises (5) auf 2 $f_0$ gelegt ist.

2. Wechselrichter nach Anspruch 1, dadurch gekennzeichnet, daß die im Gegentakt arbeitenden Schaltmittel (12,13) mit der Primärseite (8,9) eines Transformators (11) verbunden sind und daß der Parallelschwingkreis (5) mit einer Mittelanzapfung (8) dieser Primärseite (8,9) verbunden ist.

3. Wechselrichter nach Anspruch 1, dadurch gekennzeichnet, daß die Gleichspannungsquelle (3,4) einen Gleichrichter (3) aufweist, der mit einer Wechselspannungsquelle (2) verbunden ist.

4. Wechselrichter nach Anspruch 1, dadurch gekennzeichnet, daß die Schaltmittel des Zerhackerteils Transistoren (12,13) sind, die mit der Primärseite eines Transformators (11) in Verbindung stehen.

5. Wechselrichter nach einem oder nach mehreren der vorangegangenen Ansprüche, dadurch gekennzeichnet, daß die Sekundärseite (15) des Transformators (11) mit der Primärseite (16) eines weiteren Transformators (17) verbunden ist.

6. Wechselrichter nach Anspruch 4, dadurch gekennzeichnet, daß die Sekundärseite (18) des Transformators (17) mit der Katodenheizung (19) einer Elektronenstrahlkanone verbunden ist.

7. Wechselrichter nach Anspruch 1, dadurch gekennzeichnet, daß die Schaltmittel des Zerhacker-Teils GTO-Thyristoren sind.

8. Wechselrichter nach Anspruch 5, dadurch gekennzeichnet, daß die Sekundärseite (18) des weiteren Transformators (17) eine Mittelanzapfung (23) aufweist, und zwischen der Mittelanzapfung (23) und dem einen Anschluß der Sekundärseite (18) wenigstens eine Diode (21) und ein LC-Filter (24,26;25,27) sowie die Katodenheizung (19) liegen.

9. Wechselrichter nach Anspruch 8, dadurch gekennzeichnet, daß die Katode der Diode (21) mit der Katode einer weiteren Diode (20) verbunden ist, deren Anode an dem anderen Anschluß der Sekundärseite (18) liegt.

10. Wechselrichter nach Anspruch 8, dadurch gekennzeichnet, daß die Induktivitäten (24,25) der LC-Filter (24,26;25,27) je Schalenkern etwa 10 Windungen besitzen.

11. Wechselrichter nach Anspruch 2, dadurch gekennzeichnet, daß die Schaltmittel (12,13) mit ihren durchschaltbaren Strecken in Reihe zu denjenigen Enden der jeweils zugeordneten Hälften (9,10) der Primärwicklung des Transformators (11) liegen, die der Mittelanzapfung (8) gegenüberliegen.

## Claims

1. An inverter comprising: a direct-voltage source (3) and a chopper section (9, 10, 12, 13) which has switching means (12, 13) which operate in push-pull and which are switched at a frequency $f_0$, a parallel tuned circuit (5) being provided between the chopper section (9, 10, 12, 13) and the direct-voltage source (3), characterised in that the parallel tuned circuit (5) has a resonant frequency set to 2 $f_0$.

2. inverter according to claim 1, chararterised in that the switching means (12, 13) operating in push-pull are connected to a primary side (8, 9) of a transformer (11) and the parallel tuned circuit (5) is connected to a center tap (8) on said primary side (8, 9).

3. Inverter according to claim 1, characterised in that the direct-voltags source (3, 4) has a rectifier (3) which is connected to an alternating-voltage source (2).

4. Inverter according to claim 1, characterised in the the switching means of the chopper section has transistors (12, 13) which are connected to a primary side of a transformer (11).

5. Inverter according to one or more of the preceding claims, characterised in that a secondary side (15) of the transformer (11) is connected to a primary side (16) of another transformer (17).

6. Inverter according to claim 4, characterised in that a secondary side (18) of the transformer (17) is connected to a cathode heater (19) of an electron beam gun.

7. Inverter according to claim 1, characterised in that the switching means of the chopper section are GTO thyristors.

8. Inverter according to claim 5, characterised in that a secondary side (18) of said another transformer (17) has a center tap (23) and at least one diode (21) and an LC filter (24, 26; 25, 27) and the cathode heater (19) are located between the center tap (23) and one connection of the secondary side (18).

9. Inverter according to claim 8, characterised in that a cathode of the diode (21) is connected to a cathode of another diode (20), an anode of which is connected to the other connection of the secondary side (18).

10. Inverter according to claim 8, characterised in that the LC filters (24, 26; 25, 27) have inductances (24, 25) of about ten turns per pot core.

11. Inverter according to claim 2, characterised in that switchable conduction paths of the switching means (12, 13) are connected in series with ends of respectively-associated halves (9, 10) of the primary winding of the transformer (11) which are opposite to the center tap (8).

## Revendications

1. Onduleur comportant une source de tension continue (3) et un hacheur (9, 10, 12, 13) qui présente des moyens de commutation (12, 13) qui fonctionnent en push-pull et sont commutés avec la fréquence $f_0$, un circuit oscillant parallèle (5) étant prévu entre le hacheur (9, 10, 12, 13) et la source de tension continue (3), caractérisé en ce que la fréquence de résonance du circuit oscillant parallèle (5) est portée à 2 $f_0$.

2. Onduleur selon la revendication 1, caractérisé en ce que les moyens de commutation (12, 13) qui fonctionnent en push-pull sont reliés au côté primaire (8, 9) d'un transformater (11) et en ce que le circuit oscillant parallèle (5) est relié à une prise médiane (8) de ce côté primaire (8, 9).

3. Onduleur selon la revendication 1, caractérisé en ce que la source de tension continue (3, 4) présente un redresseur (3) qui est relié à une source de tension alternative (2).

4. Onduleur selon la revendication 1, caractérisé en ce que les moyens de commutation du hacheur sont des transistors (12, 13) qui sont reliés au côté primaire d'un transformateur (11).

5. Onduleur selon l'une quelconque des revendications 1 à 4, caractérisé en ce que le côté secondaire (15) du transformateur (11) est relié au côté primaire (16) d'un autre transformateur (17).

6. Onduleur selon la revendication 4, caractérisé en ce que le côté secondaire (18) du transformateur (17) est relié au chauffage cathodique (19) d'un canon à faisceaux électroniques.

7. Onduleur selon la revendication 1, caractérisé en ce que les moyens de commutation du hacheur sont des thyristors blocables.

8. Onduleur selon la revendication 5, caractérisé en ce que le côté secondaire (18) de l'autre transformateur (17) présente une prise médiane (23) et en ce qu'au moins une diode (21) et un filtre LC (24, 26; 25, 27) ainsi que le chauffage cathodique (19) se trouvent entre la prise médiane (23) et l'un des points de raccordement du côté secondaire (18).

9. Onduleur selon la revendication 8, caractérisé en ce que la cathode de la diode (21) est reliée à la cathode d'une autre diode (20) dont l'anode se trouve sur l'autre point de raccordement du côté secondaire (18).

10. Onduleur selon la revendication 8, caractérisé en ce que les inductances (24, 25) des filtres LC (24, 26; 25, 27) possèdent environ 10 spires par bobine.

11. Onduleur selon la revendication 2, caractérisé en ce que les moyens de commutation (12, 13) sont placés avec leurs circuits commutables en série par rapport aux extrémités des moitiés associées (9, 10) de l'enroulement primaire du transformateur (11) qui font face à la prise médiane (8).

EP 0 239 765 B1

**FIG.1**

**FIG.1a**

**FIG.2**

**FIG.3**